**Europäisches Patentamt**

**European Patent Office**

**Office européen des brevets**

(11) Veröffentlichungsnummer: **0 363 827**

**A2**

(12) **EUROPÄISCHE PATENTANMELDUNG**

(21) Anmeldenummer: **89118524.1**

(22) Anmeldetag: **05.10.89**

(51) Int. Cl.⁵: **B60T 17/02 , B60T 13/66 , B60G 17/04**

(30) Priorität: **05.10.88 DE 3833922**

(43) Veröffentlichungstag der Anmeldung:
**18.04.90 Patentblatt 90/16**

(84) Benannte Vertragsstaaten:
**CH DE FR GB LI SE**

(71) Anmelder: **KNORR-BREMSE AG**
**Moosacher Strasse 80 Postfach 401060**
**D-8000 München 40(DE)**

(72) Erfinder: **Staüble, Georg**
**Zittauer Strasse 20**
**D-8000 München 50(DE)**
Erfinder: **Thiaville, Claude**
**7, rue de la Bergère**
**F-59300 Aulnoy(FR)**
Erfinder: **Völbel, Heinz**
**Gabelsbergerstrasse 30**
**D-8000 München 2(DE)**
Erfinder: **Wieser, Tiberius**
**Riesstrasse 82**
**D-8000 München 50(DE)**

(54) **Drehgestellfahrzeug mit elektrohydraulischer Bremse und hydropneumatischer Abfederung.**

㉗ Das spurgebundene Drehgestellfahrzeug mit elektrohydraulischer Bremse und hydropneumatischer, niveauregelnder Abfederung weist in jedem seiner Drehgestelle eine hydraulische Druckversorgungseinheit (9) auf, aus welcher zueinander parallel über Drucksicherungsventile (15,16) sowohl die hydraulische Bremse (19) wie die hydropneumatische Abferung (20) des jeweiligen Drehgestelles druckversorgt sind. Die Rücklaufleitungen (26 und 32) der elektrohydraulischen Bremse (19) bzw. der hydropneumatischen Federung (20) führen zu einem der Druckversorgungseinheit (9) zugehörenden Hydrauliktank bzw. -sumpf (10)

Fig. 2

EP 0 363 827 A2

# Drehgestellfahrzeug mit elektrohydraulischer Bremse und hydropneumatischer Abfederung

Die Erfindung betrifft ein spurgebundenes Drehgestellfahrzeug mit elektrohydraulischer Bremse und hydropneumatischer, niveauregelnder Abfederung. Derartige, spurgebundene Drehgestellfahrzeuge sind als mittels Spurkränzen auf Schienen geführte Fahrzeuge, aber auch mittels Leitplanken, gesonderter Leitschienen oder Leitkabel bzw. -bahnen durch berührungsbehaftete Abtastung oder auch berührungsfrei geführte Fahrzeuge bekannt.

Für Drehgestellfahrzeuge sind bereits elektrohydraulische Bremsen bekannt, welche in einer Baueinheit eine hydraulische Druckversorgungseinheit mit einem Hydrauliktank bzw. -sumpf, einem aus diesem fördernden Pumpenaggregat und einem hydraulischen Speicher, einen Druckwächterschalter zum Ein- und Ausschalten des Pumpenaggregates sowie ein manuell betätigbares Entlastungsventil zum Entleeren des Druckspeichers in den Hydrauliktank bzw. -sumpf aufweist. Der Baueinheit gehört dabei des weiteren ein vorzugsweise elektrisch ansteuerbares Steuergerät zu, welches für die jeweils einem Drehgestell des Drehgestellfahrzeuges zugeordneten, direkt oder indirekt wirkenden Bremszylinder die Hydraulikdruckbeaufschlagung aus dem Druckspeicher bzw. -entlastung in den Hydrauliktank bzw. -sumpf vorzugsweise mittels Magnetventile steuert. Es ist dabei jeweils eine derartige Baueinheit für ein Drehgestell des Drehgestellfahrzeuges vorgesehen. Die Abfederung dieser Drehgestellfahrzeuge erfolgte bisher vermittels üblicher Stahl- oder Luftfederungen, wobei für letztere eine gesonderte Druckluftversorgung erforderlich war.

Für Fahrzeuge sind ganz allgemein hydropneumatische Abfederungen bekannt, welche eine Druckversorgungseinheit mit einem Pumpenaggregat sowie mit oder ohne einem Druckspeicher, ein vom Vertakalabstand des abgefederten Fahrzeugkastens zur Fahrbahn, zur Fahrzeugachse oder zu einem Drehgestellrahmen gesteuertes Steuergerät sowie in ihrer Hydraulikfüllung vom Steuergerät überwachte Federungszylinder mit integriertem oder gesonderten Blasenspeicher umfassen. Das Steuergerät kann dabei als mechanisches Niveauregelventil oder als elektrisches bzw. elektronisches Steuergerät mit die Hydraulikfüllung vermittels Magnetventilen steuerndes Steuergerät ausgebildet sein. Die Blasenspeicher der Federungszylinder weisen im allgemeinen eine durch eine Membrane abgetrennte, mit Stickstoff gefüllte Druckblase auf. Es ist üblich, bei derartigen Abfederungen die Ein- und Ausfederung unterschiedlich zu dämpfen und des weiteren Regelungsvorgänge nur während bestimmter Zeitspannen, beispielsweise in Abhängigkeit von Türöffnungen bzw. -schließungen oder Anfahrvorgängen, zuzulassen. Die Druckversorgung dieser Abfederungen erfolgt üblicherweise durch eine eigene Druckversorgungseinheit.

Es ist Aufgabe der Erfindung, ein spurgebundenes Drehgestellfahrzeug der eingangs genannten Art zu schaffen, bei welchem der Bauaufwand für die elektrohydraulische Bremse sowie die hydropneumatische Abfederung gering gehalten werden können.

Diese Aufgabe wird nach der Erfindung dadurch gelöst, daß an jedem Drehgestell je eine hydraulische Druckversorgungseinheit vorgesehen ist, aus welcher zueinander parallel über Drucksicherungsventile sowohl die elektrohydraulische Bremse wie die hydropneumatische Abfederung des jeweiligen Drehgestelles druckversorgt sind.

Die nach der weiteren Erfindung vorteilhafte und zweckmäßige, weitere Ausbildung eines derartigen Drehgestellfahrzeuges kann den Unteransprüchen entnommen werden.

In den Zeichnungen sind Ausführungsbeispiele für nach der Erfindung ausgebildete Drehgestellfahrzeuge dargestellt, und zwar zeigt

Fig.1 den Prinzipaufbau eines Drehgestellfahrzeuges,

Fig.2 schematisch Teile der elektrohydraulischen Bremse und hydropneumatischen Abfederung für ein Drehgestell und

Fig.3 eine Anordnungsmöglichkeit der Bremse und Abfederung in einem Drehgestellfahrzeug.

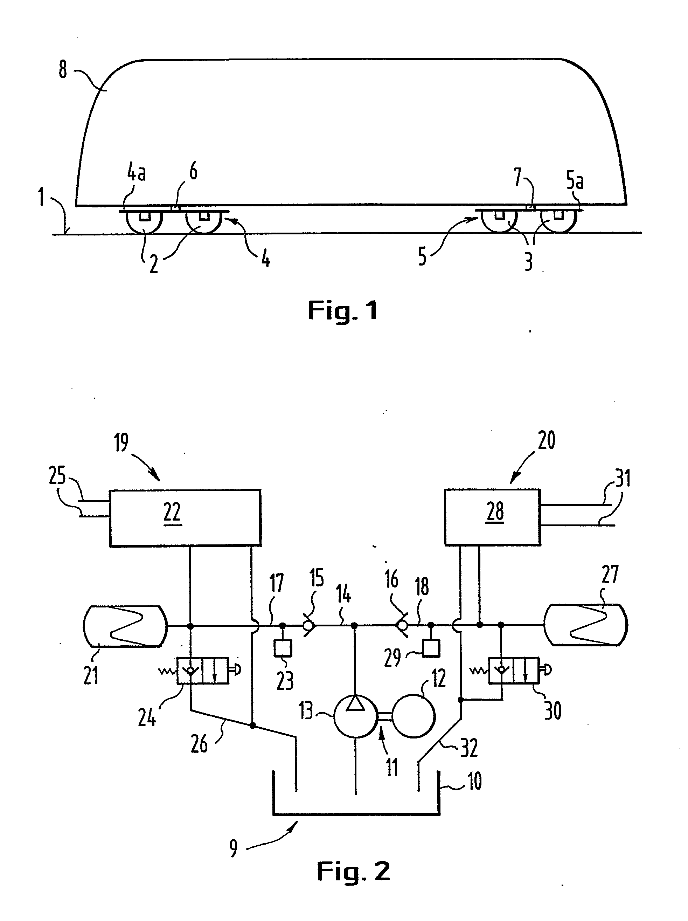

Das in Fig.1 schematisch dargestellte Drehgestellfahrzeug der eingangs genannten Art steht auf einer Fahrbahn 1 auf, welche als Schienen, Betonbalken oder auch mehr oder weniger ebene Fahrfläche ausgebildet ist. Die Räder 2 und 3 sind zu Gruppen zusammengefaßt, deren jede Gruppe in einem Drehgestell 4 bzw. 5 mit einem Drehgestellrahmen 4a bzw. 5a gelagert ist. Auf den Drehgestellrahmen 4a und 5a ruht über hydraulische Federungszylinder 6 bzw. 7 der Fahrzeugkasten 8 auf.

In jedem Drehgestell 4 und 5 befindet sich jeweils eine Einrichtung der in Fig. 2 dargestellten Art. Diese Einrichtung umfaßt eine hydraulische Druckversorgungseinheit 9, bestehend aus einem drucklosen Hydrauliktank bzw. -sumpf 10, aus welchem ein Pumpenaggregat 11 vermittels einer von einem Elektromotor 12 angetriebenen Pumpe 13 Hydraulikmedium unter Druck in eine Versorgungsleitung 14 speist. An die Versorgungsleitung 14 ist über jeweils ein als Rückschlagventil 15 bzw. 16 ausgebildetes Drucksicherungsventil eine Versorgungsleitung 17 bzw. 18 angeschlossen, deren eine (17) zu einer elektrohydraulischen Bremse 19 und deren andere (18) zu einer hydropneumatischen Abfederung 20 führt. Seitens der elektrohydraulischen Bremse 19 ist die Versorgungsleitung 19 an einen Druckspeicher 21, ein Steuergerät 22, einen Druckwächterschalter 23 und ein im Ruhezustand gesperrtes, manuell betätigbares Entlastungsventil 24 angeschlossen. Vom vorzugsweise über nicht dargestellte Leitungen und Einrichtungen elektrisch ansteuerbaren Steuergerät 22 führen Ausgangsleitungen 25 zu in Fig.2 nicht dargestellten Zuspannzylindern von den Rädern des jeweiligen Drehgestelles 4 bzw. 5 zugeordneten Reibungsbremsen, welche in Fig.2 ebenfalls nicht gezeigt sind. Vom Steuergerät 22 und vom Entlastungsventil 24 führt eine gemeinsame Rücklaufleitung 26 zum Hydrauliktank bzw. -sumpf. Das Steuergerät 22 beinhaltet vorzugsweise Magnetventile, mittels welchen die Ausgangsleitungen 25 aus der Versorgungsleitung 17 bzw. dem Druckspeicher 21 hydraulikdruckaufschlagbar bzw. in die Rücklaufleitung 26 entleerbar sind. Die Versorgungsleitung 18 ist seitens der hydropneumatischen Abfederung 20 in entsprechender Weise an einen Druckspeicher 27, ein Steuergerät 28, einen Druckwächterschalter 29 und ein Entlastungsventil 30 angeschlossen. Vom Steuergerät 28 gehen Ausgangsleitungen 31 zu in Fig.2 nicht dargestellten, hydraulischen Federungszylindern des jeweiligen Drehgestelles aus. Das Steuergerät 28 wird vorzugsweise elektrisch von nicht dargestellten Vertikalabstandssensoren gesteuert, welche den Vertikalabstand zwischen dem Fahrzeugkasten 8 und dem jeweiligen Drehgestellrahmen 4a bzw. 5a (Fig.1) oder einen entsprechenden Vertikalabstand messen; es steuert für die Ausgangsleitungen 31 die Hydraulikdruckbeaufschlagung aus der Versorgungsleitung 18 bzw. dem Druckspeicher 27 bzw. Entlastung in eine Rücklaufleitung 32 vorzugsweise vermittels in ihn enthaltener Magnetventile. Das Entlastungsventil 30 ist ausgangsseitig an die zum Hydrauliktank bzw. - sumpf 10 führende Rücklaufleitung 32 angeschlossen.

Die Druckwächterschalter 23 und 29 überwachen zueinander parallel das Ein- und Ausschalten des Elektromotors 12 für die Pumpe 13, wobei der Druckwächterschalter 23 einen niedrigeren Einschaltdruck von beispielsweise 120 bar als der Druckwächterschalter 29 mit beispielsweise 140 bar aufweist. Der Ausschaltdruck beider Druckwächterschalter 23 und 29 ist wenigstens annähernd gleich, er kann beispielsweise bei 150 bar liegen. Die Pumpe 13 tritt somit bei Unterschreiten des Einschaltdruckes des Druckwächterschalters 23 (140 bar) in Funktion und lädt über die Versorgungsleitung 14 sowie die Rückschlagventile 15 und 16 die Druckspeicher 21 und 27 bis zum Ausschaltdruck (150 bar) auf. Sollte jedoch der in der Versorgungsleitung 17 mit dem Druckspeicher 21 herrschende Druck durch entsprechende Bremsvorgänge unter den Einschaltdruck des Druckwächterschalters 23 (120 bar) absinken, während im Druckspeicher 27 noch eine den Einschaltwert des Druckwächterschalters 29 übersteigender Druck herrscht, so schaltet der Druckwächterschalter 23 die Pumpe 13 ein und erst bei Erreichen des Ausschaltdruckes (150 bar) wieder aus, wodurch beide Druckspeicher 21 und 27 auf diese Ausschaltdruckhöhe aufgeladen werden.

Es ist ersichtlich, daß an jedem Drehgestell 4 bzw. 5 für die jeweilige elektrohydraulische Bremse und die hydropneumatische Abfederung nur eine Druckversorgungseinheit 9 erforderlich ist, wobei bei drehgestellautonomer Druckversorgung für die Bremse und die Abfederung sich ein bisher benötigtes, zweites Pumpen- bzw. Kompressoraggregat erübrigt.

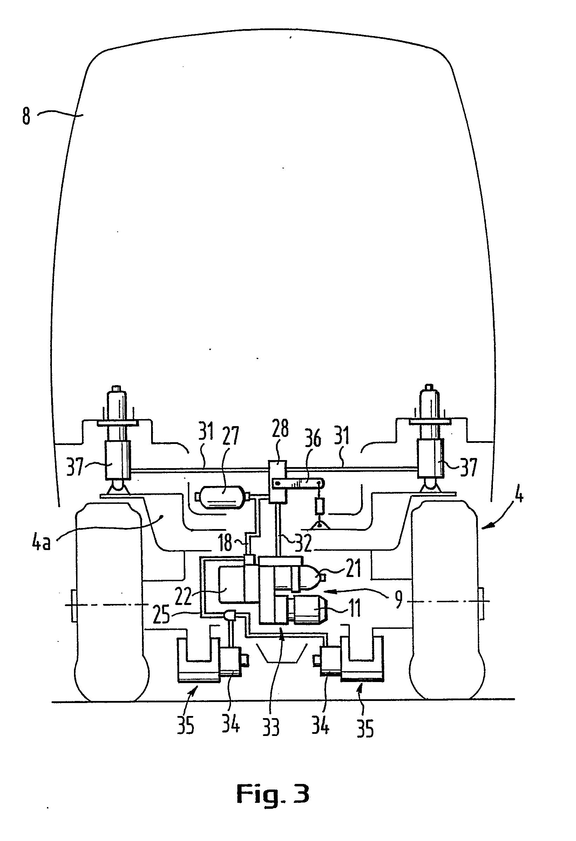

Es kann zweckmäßig sein, das Drehgestellfahrzeug gemäß der einen schematischen Querschnitt durch dieses zeigenden Fig.3 auszubilden. Gemäß Fig.3 ist die gesamte Druckversorgungseinheit 9 mit dem Pumpenaggregat 11, dem Druckspeicher 21 sowie dem Steuergerät 22 zu einer Baueinheit 33 zusammengeflanscht, welche zugleich noch das in Fig.2 gezeigte Rückschlagventil 15, den Druckwächterschalter 23 sowie gegebenenfalls das Entlastungsventil 24 enthält. Von dieser Baueinheit 33 geht eine sich gabelnde Ausgangsleitung 25 zu den Zuspannzylindern 34 zweier Scheibenbremsen 35 aus, welche den beidseitigen, mit Pneumatikreifen ausgestatteten Rädern einer Fahrzeugachse zugeordnet sind. Die Ausgangsleitung 25 kann sich zu weiteren Zuspannzylindern 34 verzweigen, welche den Scheibenbremsen der Räder der zweiten Fahrzeugachse des betreffenden Drehgestelles, nach Fig.3 beispielsweise des Drehgestelles 4 mit dem Drehgestellrahmen 4a, zugeordnet sind. Weiterhin geht von der Baueinheit 33 die Druckversorgungsleitung 18 aus, welche zum Druckspeicher 27 und zum als übliches Niveauregelventil ausgebildeten Steuergerät 28 führt; das Niveausteuerventil ist vermittels eines im wesentlichen waagrecht auskragenden Hebels 36 in üblicher Weise vom Vertikalabstand zwischen dem Drehgestellrahmen 4a und dem Fahrzeugkasten 8 steuerbar. Vom Niveausteuerventil (Steuergerät 28) führt die Rücklaufleitung 32 zurück zur Baueinheit 33. Die Ausgangsleitungen 31 verbinden das Niveausteuerventil mit hydraulischen Federungszylindern 37, welche zwischen den Drehgestellrahmen 4a und den Fahrzeugkasten 8 eingeordnet sind. Durch Verwendung der an sich bekannten Baueinheit 33 ergibt sich eine besonders preis- und einbaugünstige Anordnung.

Bezugszeichenliste

1 Fahrbahn
2 Räder
3 Räder
4 Drehgestell
4a Drehgestellrahmen
5 Drehgestell
5a Drehgestellrahmen
6 Federungszylinder
7 Federungszylinder
8 Fahrzeugkasten
9 Druckversorgungseinheit
10 Hydrauliktank bzw. -sumpf
11 Pumpenaggregat
12 Elektromotor
13 Pumpe
14 Versorgungsleitung
15 Rückschlagventil
16 Rückschlagventil
17 Versorgungsleitung
18 Versorgungsleitung
19 elektrohydraulische Bremse
20 hydropneumatische Abfederung
21 Druckspeicher
22 Steuergerät
23 Druckwächterschalter
24 Entlastungsventil
25 Ausgangsleitung
26 Rücklaufleitung
27 Druckspeicher
28 Steuergerät
29 Druckwächterschalter
30 Entlastungsventil
31 Ausgangsleitung
32 Rücklaufleitung
33 Baueinheit
34 Zuspannzylinder
35 Scheibenbremse
36 Hebel
37 Federungszylinder

## Ansprüche

1. Spurgebundes Drehgestellfahrzeug mit elektrohydraulischer Bremse (19) und hydropneumatischer, niveauregelnder Abfederung (20), dadurch gekennzeichnet, daß an jedem Drehgestell (4;5) je eine hydraulische Druckversorgungseinheit (9) vorgesehen ist, aus welcher zueinander parallel über Drucksicherungsventile (15,16) sowohl die elektrohydraulische Bremse (19) wie die hydropneumatische Abfederung (20) des jeweiligen Drehgestelles (4;5) druckversorgt sind.

2. Drehgestellfahrzeug nach Anspruch 1, dadurch gekennzeichnet, daß die Drucksicherungsventile in Strömungsrichtung zu der Druckversorgungseinheit (9) schließende Rückschlagventile (15,16) sind.

3. Drehgestellfahrzeug nach Anspruch 2, dadurch gekennzeichnet, daß den Drucksicherungsventilen (15,16) jeweils ein der elektrohydraulischen Bremse (19) bzw. der hydropneumatischen Abfederung (20) des Drehgestells (4;5) zugeordneter Druckspeicher (21,27) nachgeschaltet ist.

4. Drehgestellfahrzeug nach Anspruch 3, dadurch gekennzeichnet, daß jedem Druckspeicher (21;27) ein Druckwächterschalter (23;29) zum Ein- und Ausschalten eines der Druckversorgungseinheit (9) zugehörenden Pumpenaggregates (11) zugeordnet ist.

5. Drehgestellfahrzeug nach Anspruch 4, dadurch gekennzeichnet, daß der dem Druckspeicher (21) für die elektrohydraulische Bremse (19) zugeordnete Druckwächterschalter (23) einen niedrigeren Einschaltdruck für das Pumpenaggregat (11) als der dem Druckspeicher (27) für die hydropneumatische Abfederung (20) zugeordnete Druckwächterschalter (29) aufweist, daß die Abschaltdrücke beider Druckwächterschalter (23 und 29) jedoch zumindenst annähernd gleich sind.

6. Drehgestellfahrzeug nach einem der vorstehenden Ansprüche 1 bis 5, dadurch gekennzeichnet, daß die Druckversorgungseinheit (9) jedes Drehgestelles (4;5) einen der elektrohydraulischen Bremse (19) und der hydropneumatischen Abfederung (20) gemeinsamen, drucklosen Hydrauliktank bzw. -sumpf (10) aufweist, in welchen Hydraulik-Rücklaufleitungen (26, 32) der Bremse und der Abfederung münden.

7. Drehgestellfahrzeug nach den Ansprüchen 3 und 6, dadurch gekennzeichnet, daß jedem Druckspeicher (21,27) ein manuell betätigbares Entlastungsventil (24,30) zum Entleeren des Druckspeichers (21,27) in den Hydrauliktank bzw. -sumpf (10) zugeordnet ist.

8. Drehgestellfahrzeug nach einem oder mehreren der vorstehenden Ansprüche 1 bis 7, dadurch gekennzeichnet, daß die hydraulische Druckversorgungseinheit (9) mit einem Steuergerät (22) für die elektrohydraulische Bremse (19) und dem dieser zugeordnetedn Drucksicherungsventil (15) sowie gegebenenfalls Druckschalter (23) und Entlastungsventil (24) zu einer Baueinheit (33) zusammengefaßt ist.

**Fig. 1**

**Fig. 2**

Fig. 3